# EUROPEAN PATENT APPLICATION

(11) **EP 2 175 336 A1**
(43) Date of publication of application: **14.04.2010**
(21) Application number: 09172062.3
(22) Date of filing: 02.10.2009
(51) Int. Cl.: G05B 23/02

(54) **Adaptive Performance Model and Methods for System Maintenance**

(30) Priority: 10.10.2008 US 249176
(71) Applicant: General Electric Company, Schenectady, NY 12345 (US)
(72) Inventor: Wilkes, Kevin Wood, Greenville, SC 29615 (US); Healy, Timothy Andrew, Simpsonville, SC 29681 (US); Rosson, Randy Scott, Simpsonville, SC 29681 (US)
(74) Representative: Gray, Thomas

(57) **Abstract**

A system includes a correction factor module (36) that receives modeled data (44) generated from a simulation model (42) and measured data (52), that determines a difference between the modeled data (44) and the measured data (52), and that applies a filter to the difference to determine a correction value (54); and a performance monitoring module (38) that analyzes the correction value, and that generates a component alert (56) based on the analysis.

## Description

### BACKGROUND OF THE INVENTION

The subject matter disclosed herein relates to systems and methods for monitoring the performance of gas turbine engines.

Gas turbine engines are used, for example, as a source of power in planes, trains, ships, electrical generators, and tanks. Gas turbine engines typically include three main components, a compressor, a combustor, and a turbine. Control systems monitor conditions of the gas turbine engine and control one or more actuators of the components to achieve a desired power output.

As the gas turbine engine operates over an extended period of time, the performance of one or more of the components may degrade. For example, flow capacities and other operating conditions may vary from the original assumed conditions. Because of the degradation, the control of the gas turbine engine becomes increasingly out of tune. This may cause the gas turbine engine to operate at states that diverge from desired operational states. In some cases, the operation of the gas turbine engine at less than desirable operational states can cause durability concerns regarding its components.

### BRIEF DESCRIPTION OF THE INVENTION

According to one aspect of the invention, a system includes a correction factor module that receives modeled data generated from a simulation model and measured data, that determines a difference between the modeled data and the measured data, and that applies a filter to the difference to determine a correction value; and a performance monitoring module that analyzes the correction value, and that generates a component alert based on the analysis.

According to a second aspect of the invention, a system for monitoring the performance of a gas turbine engine is provided. The system includes a correction factor module that receives modeled data generated from a real-time gas turbine engine simulation model and measured data sensed from the gas turbine engine in real-time, that determines a difference between the modeled data and the measured data, and that applies a filter to the difference to determine a correction value; and a performance monitoring module that analyzes the correction value, and that generates a component alert based on the analysis.

According to a third aspect of the invention, a method for monitoring the performance of a gas turbine engine is provided. The method includes: receiving measured data sensed from the gas turbine engine in real-time; determining a difference between the measured data and modeled data generated from a real-time gas turbine engine simulation model; applying a filter to the difference to determine a correction value; performing an analysis of the correction value; and generating a component alert based on the analysis.

These and other advantages and features will become more apparent from the following description taken in conjunction with the drawings.

### BRIEF DESCRIPTION OF THE DRAWINGS

There follows a detailed description of embodiments of the invention by way of example only with reference to the accompanying drawings, in which:
FIG. 1 is a functional block diagram illustrating a gas turbine engine system that includes a component performance monitoring system in accordance with an exemplary embodiment;
FIG. 2 is a dataflow diagram illustrating a control module of the gas turbine engine system of FIG. 1 in accordance with an exemplary embodiment; and
FIG. 3 is a flowchart illustrating a component performance monitoring method that can be performed by the control module of FIG. 2 in accordance with an exemplary embodiment.

### DETAILED DESCRIPTION OF THE INVENTION

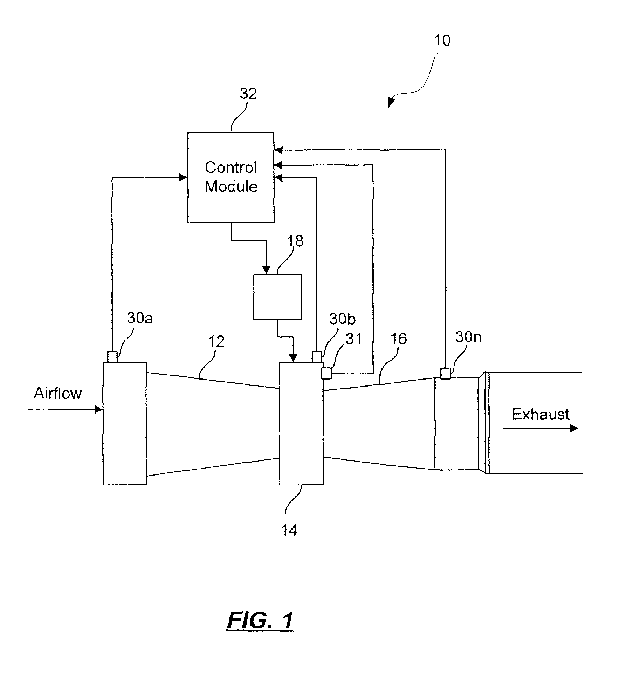

Referring to FIG. 1, a gas turbine engine system 10 is provided that includes a real-time component performance monitoring system in accordance with an exemplary embodiment. In various embodiments, the gas turbine engine system 10 includes a compressor 12, a combustor 14, and a turbine 16. The turbine 16 is coupled to the compressor 12 via a compressor shaft (not shown). The combustor 14 is disposed between the compressor 12 and the turbine 16.

Ambient air is drawn into the compressor 12 and compressed therein. The compressed air is supplied to the combustor 14. A fuel injection system 18 supplies fuel to the compressed air within the combustor 14. The air/fuel mixture is combusted within the combustor 14 to increase the energy content of the compressed gas. The high-energy gas passes over a first set of blades of the turbine 16, causing the turbine 16 to spin. The turbine spin mechanically powers the compressor 12 via the compressor shaft.

In various embodiments, the resulting high-pressure, high-velocity exhaust gas passes through a nozzle (not shown), thereby generating thrust by accelerating the hot exhaust, by expansion, back to atmospheric pressure. In various other embodiments, the resulting exhaust gas passes over a second set of turbine blades (not shown), thereby causing an output shaft (not shown) coupled to the turbine 16 to spin. In various embodiments, the output shaft is coupled to a generator (not shown). The generator converts the mechanical energy of the output shaft to electrical energy.

The operation of the exemplary gas turbine engine system 10 is monitored by one or more sensors 30a-30n. The sensors 30a-30n detect and measure various observable conditions of the gas turbine engine system 10, the generator, and/or the ambient environment. In one example, the sensors 30a-30n include, temperature sensors, pressures sensors, humidity sensors, fuel flow sensors, speed sensors, flame detector sensors, valve position sensors, guide vane angle sensors, or the like that measure the various parameters at various locations in the gas turbine engine system 10. One or more redundant sensors 31 similarly detect and measure various observable conditions of the gas turbine engine system 10.

A control module 32 receives the signals generated by the one or more sensors 30a-30n. Based on the signals, the control module 32 controls one or more components of the gas turbine engine system 10. The control module 32 further monitors the real-time performance of the components to determine a current status of the components in accordance with the present disclosure.

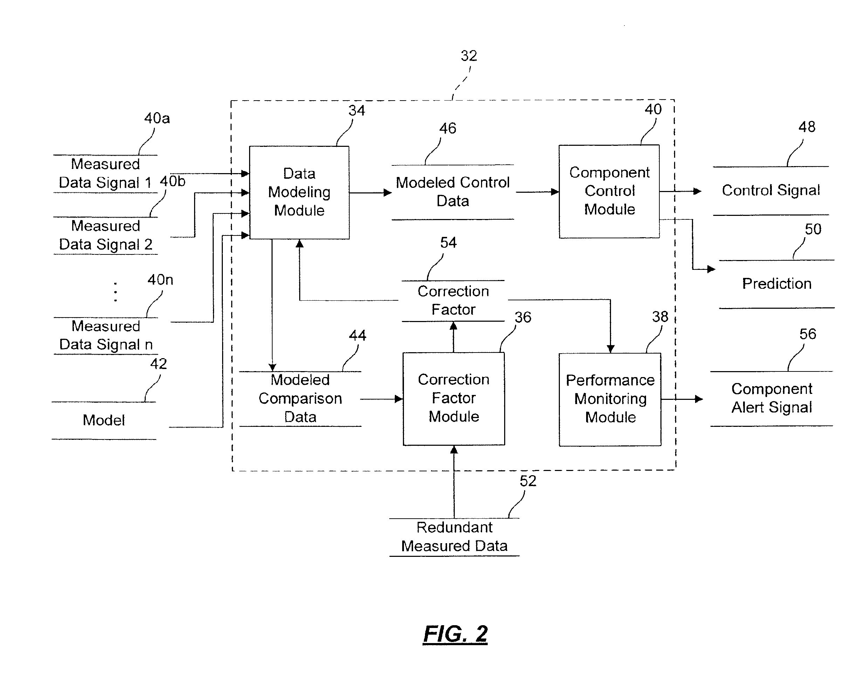

Turning now to FIG. 2, the control module 32 is shown in more detail in accordance with an exemplary embodiment. The control module 32 includes one or more sub-modules and datastores. As used herein the terms module and sub-module refer to an application specific integrated circuit (ASIC), an electronic circuit, a processor (shared, dedicated, or group) and memory that executes one or more software or firmware programs, a combinational logic circuit, and/or other suitable components that provide the described functionality.

As can be appreciated, the sub-modules shown in FIG. 2 can be combined and/or further partitioned to similarly control the gas turbine engine system 10 (FIG. 1) and/or to monitor the performance of the gas turbine engine system 10 (FIG. 1). In this example, the control module 32 includes a data modeling module 34, a correction factor module 36, a performance monitoring module 38, and a component control module 40.

The data modeling module 34 receives as input one or more measured data signals 40a-40n that are generated by the one or more sensors 30a-30n (FIG. 1) of the gas turbine engine system 10 (FIG. 1), and a predefined simulation model 42. Based on the measured data signals, the data modeling module 34 performs operations of the predefined simulation model 42. The simulation model 42 can be, for example, a physics-based aero-thermodynamic computer model, a regression-fit model, a neural-net model, and/or other suitable models for simulating one or more features of the gas turbine engine system 10 (FIG. 1). Based on the execution of the operations of the predefined simulation model 42, the data modeling module 34 generates modeled comparison data 44 and modeled control data 46 that correspond to the gas turbine engine system 10 (FIG. 1).

In one example, the model 42 includes a simulation of the gas turbine engine system 10 (FIG. 1). In this example, the measured data signals 40a-40n include, ambient conditions, an angle of inlet guide vanes, an amount of fuel, and a rotational speed of the turbine. The data modeling module 34 executes the operations of the turbine model 42 based on these measured data signals 40a-40n and generates the modeled comparison data 44 and the modeled control data 46. In this example, the modeled comparison data 44 can include a modeled power output, a modeled turbine exhaust temperature, and/or a modeled compressor condition. The modeled control data 46 can include desired values, for example, a desired fuel flow rate.

The component control module 40 receives as input the modeled control data 46 and, optionally, other measured data signals (inputs not shown). Based on the inputs, the component control module 40 controls the operation of one or more component of the gas turbine engine system 10 (FIG. 1) via a control signal 48 and/or generates a prediction 50 of the operation of one or more component.

In one example, the component control module 40 receives as input a desired fuel rate and controls an actual fuel flow rate of the fuel system 18 (FIG. 1) to the combustor 12 (FIG. 1) to be at or near the desired fuel flow rate.

The correction factor module 36 receives as input the modeled comparison data 44 and a measured data signal 52 relating to the modeled comparison data 44. In one example, the measured data signal 52 is a redundant measured signal generated by one of the redundant sensors 31.

The correction factor module 36 normalizes the modeled comparison data 44 and the data of the measured data signal 52 and compares the normalized modeled comparison data to the normalized measured data to determine a difference. The correction factor module 36 then applies a filter to the difference to determine a correction factor 54. In one example the filter is a Kalman filter.

In various embodiments, the correction factor 54 includes a data match multiplier (DMM) that has a value of 1.0 when the difference is zero or near zero (e.g., less than a predetermined value). As the performance of the related component degrades and the difference increases (or decrease), the value of the DMM adjusts to be less than or greater than 1.0.

In various embodiments, the simulation model 42 is a real-time adaptive model that includes adjustable parameters. The adjustable parameters can be automatically adjusted in real-time to adapt the model 42 to meet varying conditions. In this case, the data modeling module 34 further receives as input the correction factor 54. The data modeling module 34 adjusts the adjustable parameters based on the correction factor 54 to conform the simulation model 42 to the degraded component.

The performance monitoring module 38 receives as input the correction factor 54. The performance monitoring module 38 tracks the changes in the correction factor 54 for the respective component. By analyzing the changes or the correction factor 54 directly, the performance monitoring module 38 generates a component alert signal 56. In one example, the performance monitoring module 38 analyzes the changes or the correction factor 54 by at least one of: performing a comparison of the correction factor 54 with a pre-determined condition; performing a comparison of the correction factor 54 or changes with a historical correction value of the gas turbine engine system 10; and comparing a rate-of-change of the correction value to a pre-determined threshold.

In various embodiments, the component alert signal 56 sets a status of a predefined diagnostic code relating to the component. In various embodiments, the component alert signal 56 includes the diagnostic code. The diagnostic code can then be retrieved by a service tool directly or wirelessly connected to the control module 32 (FIG.1) and/or transmitted to a remote location, for example, via a telematics system. In various other embodiments, the component alert signal 56 illuminates an indicator lamp indicating the alert status of the component. In various other embodiments, the component alert signal 56 includes an audio warning signal that activates an audio device that, when sounded, indicates the alert status of the component.

As can be appreciated, the component alert signal 56 can be accessible to a technician, and/or an operator of the gas turbine engine system 10 (FIG. 1). Based on the component alert signal 56, the technician and/or operator can: determine and schedule maintenance of the component; perform an inspection of the component for foreign objects, foreign object damage, or other hardware failures before a next operation; or cease operation of the gas turbine engine prior to the occurrence of damage to the component.

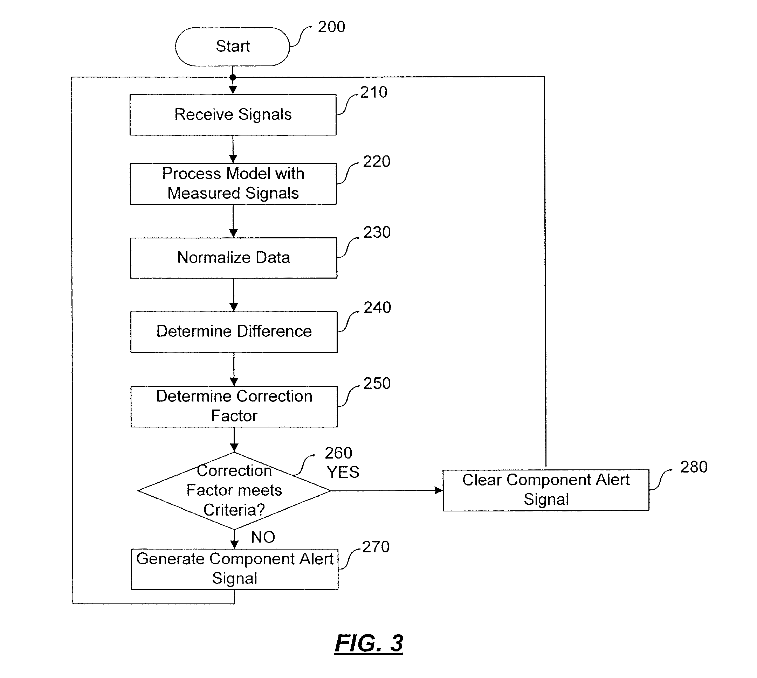

Turning now to FIG. 3 and with continued reference to FIG. 2, a flowchart illustrates a component performance monitoring method that can be performed by the control module 32 of FIG. 2 in accordance with an exemplary embodiment. As can be appreciated in light of the disclosure, the order of operation within the method is not limited to the sequential execution as illustrated in FIG. 3, but may be performed in one or more varying orders as applicable and in accordance with the present disclosure. As can be appreciated, one or more steps of the method can be added or deleted from the method shown in FIG. 3 without altering the spirit of the method.

In various embodiments, the method is scheduled to run based on predetermined events, and/or at a selected time. In various other embodiments, the method is scheduled to run continually during the operation of the gas turbine engine system 10 (FIG. 1).

In one example, the method may begin at 200. The measured data signals 40a-40n are received at 210. Based on the measured data signals 40a-40n, the operations of the model 42 are performed and the modeled comparison data 44 is generated at 220. The modeled comparison data 44 and the corresponding redundant measured data 52 are normalized at 230. The normalized data values are compared to determine a difference at 240. A filter is applied to the difference (as discussed earlier) at 250 to determine the correction factor 54.

The correction factor 54 is evaluated at 260. If the correction factor 54 does not meet predetermined criteria (e.g., not within a predetermined range, not equal to a predetermined value, greater than or less than a predetermined value, etc.) at 260, then the component alert signal 56 is generated at 270 and the method continues at 210 by receiving the measured inputs. Otherwise, if the correction factor 54 does meet the predetermined criteria at 260, the component alert signal 56 is cleared at 280 and the method continues at 210 by receiving the measured inputs.

As can be appreciated, the method can be applied to each component of the gas turbine engine system 10 (FIG. 1), and/or to sub-components of the components of the gas turbine engine system 10 (FIG. 1) individually, or collectively.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A system, comprising:
a correction factor module (36) that receives modeled data (44) generated from a simulation model (42) and measured data (52), that determines a difference between the modeled data (44) and the measured data (52), and that applies a filter to the difference to determine a correction value (54); and
a performance monitoring module (38) that analyzes the correction value (54), and that generates a component alert (56) based on the analysis.

2. The system of claim 1, further comprising a data modeling module (34) that receives other measured data (40a-40n), and that generates the modeled data (44) based on the other measured data (40a-40n) and the simulation model (42).

3. The system of claim 2, wherein the data modeling module (34) further generates modeled control data (46) based on the simulation model (42).

4. The system of any of the preceding claims, wherein the correction factor module (54) normalizes at least one of the modeled data (44) and the measured data (52) and wherein the difference between the modeled data (44) and the measured data (52) is determined based on the normalized at least one of modeled data (44) and measured data (52).

5. The system of any of the preceding claims, wherein the analysis of the correction value (54) includes at least one of a comparison to one or more pre-determined conditions and a comparison to a historical correction value.

6. The system of claim 5 wherein the comparison to the historical correction value includes comparing a rate-of-change of the correction value to a pre-determined threshold.

7. A system for monitoring the performance of a gas turbine engine (10), the system comprising:
a correction factor module (36) that receives modeled data (44) generated from a real-time gas turbine engine simulation model (42) and measured data (52) sensed from the gas turbine engine (10) in real-time, that determines a difference between the modeled data (44) and the measured data (52), and that applies a filter to the difference to determine a correction value (54); and
a performance monitoring module (38) that analyzes the correction value (54), and that generates a component alert (56) based on the analysis.

8. The system of claim 7 further comprising a data modeling module (34) that receives other measured data (40a-40n) sensed from the gas turbine engine (10) in real-time, and that generates the modeled data (44) a based on the simulation model (42) and the other measured data (40a-40n).

9. A method for monitoring the performance of a gas turbine engine, the method comprising:
receiving measured data sensed from the gas turbine engine in real-time;
determining a difference between the measured data and modeled data generated from a real-time gas turbine engine simulation model;
applying a filter to the difference to determine a correction value;
performing an analysis of the correction value; and
generating a component alert based on the analysis.

10. The method of claim 9, further comprising generating modeled control data based on a predefined model and measured data.

11. The method of claim 10, further comprising controlling at least one of a component and a sub-component of the gas turbine engine based on the modeled control data.

12. The method of any of claims 9 to 11, further comprising normalizing at least one of the modeled data and the measured data and wherein the determining the difference between the modeled data and the measured data is based on the normalized at least one of modeled data and measured data.

13. The method of any of claims 9 to 12, wherein performing the analysis of the correction value includes performing a comparison of the correction value with a pre-determined condition.

14. The method of any of claims 9 to 12, wherein the performing the analysis of the correction value includes performing a comparison of the correction value to with a historical correction value of the gas turbine engine.

15. The method of claim 14, wherein the performing the comparison of the correction value with the historical correction value includes comparing a rate-of-change of the correction value to a pre-determined threshold.
